# EUROPÄISCHE PATENTANMELDUNG

(11) **EP 2 360 630 A1**
(43) Veröffentlichungstag der Anmeldung: **24.08.2011**
(21) Anmeldenummer: 10000877.0
(22) Anmeldetag: 28.01.2010
(51) Int. Cl.: G06Q 10/00

(54) **Qualitätssicherung von industriellen Produktions- und Montageprozessen**

(71) Anmelder: SIEMENS AKTIENGESELLSCHAFT, 80333 München (DE)
(72) Erfinder: Dürr, Matthias, 90473 Nürnberg (DE); Goldenberg, Norbert, 90542 Eckental (DE); Hohenbichler, Gerald, Dr., 4484 Kronstorf (AT); Huebner, Norbert, 4222 Luftenberg (AT); Linzer, Bernd, Dr., 4020 Linz (AT); Löffler, Hans-Ulrich, Dr., 91054 Erlangen (DE)

(57) **Zusammenfassung**

Qualitätssicherung von industriellen Produktions- und Montageprozessen

Verfahren und Vorrichtung zur Qualitätssicherung eines industriellen Produktionsprozesses oder eines Montageprozesses zur Herstellung von Produkten, wobei Produktdaten der Herstellung nachgelagerter Produktlebenszyklusabschnitte systematisch erfasst und analysiert werden und für die Qualitätssicherung des industriellen Produktions- oder Montageprozesses direkt verwendet werden. Die Vorrichtung und das Verfahren können insbesondere in ein PLM-System (Product Lifecycle Management / Produktlebenszyklusmanagement) integriert sein, oder als PLM-System realisiert sein.

## Beschreibung

Qualitätssicherung von industriellen Produktions- und Montageprozessen

Die Erfindung betrifft ein Verfahren zur Qualitätssicherung eines industriellen Produktionsprozesses oder eines Montageprozesses zur Herstellung von Produkten, sowie eine Vorrichtung zur Durchführung des Verfahrens.

Die Charakterisierung von Produkt- und Qualitätseigenschaften bei industriellen Prozessen (z.B. Produktion, Montage) stößt in der Praxis an Grenzen bezüglich Wirtschaftlichkeit und Praktikabilität. Dies bedeutet in der Praxis z.B. dass bei Prozessen (in Abhängigkeit vom Anwendungszweck und nach Abschätzung der Zulässigkeit) nicht alle technisch möglichen Messungen durchgeführt werden, nur stichprobenartig gemessen wird oder auch Prozesse primär aufgrund von mehr oder weniger umfassenden vorwiegend anlagenlokalen Erfahrungswerten gefahren werden.

Die Beherrschung des Problems erfolgt z.B. durch vorherige Abschätzung des nötigen Messaufwands (Messgrößen, Messgeräte, Messintensität, usw.) und ggf. durch Anpassung oder Änderungen des industriellen Prozesses bei Reklamationen oder Beschwerden von Kunden.

Obwohl Produktreklamationen und Beschwerden (z.B. Klagen, Rückmeldungen, Feedback) der Kunden von Firmen oft im Rahmen eines CRM-Managements (Customer Relationship Management) abgefragt und analysiert werden, können darauf basierende Änderungen an Parametern im zugrundeliegenden Herstellungsprozess des Produktes aber erst mit einer zeitlichen Verzögerung Berücksichtigung finden.

Die Aufgabe der vorliegenden Erfindung ist es, ein verbessertes Verfahren für die Qualitätssicherung von industriellen Herstellungsprozessen basierend auf Rückmeldungsdaten von Verbrauchern anzugeben.

Die Aufgabe wird gelöst durch ein Verfahren zur Qualitätssicherung eines industriellen Produktionsprozesses oder eines Montageprozesses zur Herstellung von Produkten, wobei Produktdaten der Herstellung nachgelagerter Produktlebenszyklusabschnitte systematisch erfasst und analysiert werden und für die Qualitätssicherung des industriellen Produktions- oder Montageprozesses direkt verwendet werden. Dies ermöglicht die strukturierte Nutzung "indirekter" Informationen zur Verbesserung der Erfahrungsbasis im industriellen Produktions- oder Montageprozesses. Hierzu werden alle relevant erscheinenden verfügbaren Informationen aus nachgelagerten Lebenszyklusabschnitten (z.B. Verarbeitung, Nutzung, Entsorgung / Recycling) gesammelt und zur laufenden Qualitätssteuerung eingesetzt. Die nachgelagerten Daten (d.h. die Informationen aus nachgelagerten Lebenszyklusabschnitten) fallen im Rahmen einer normalen Bearbeitung an. Die technische Realisierung der Datenrückführung (Rückkopplung) kann z.B. vorzugsweise über Online-IT-Schnittstellen erfolgen, mit denen entsprechend zwischen Hersteller und Verarbeiter (Verbraucher) definierte Daten automatisch zwischen den Bearbeitungssystemen der Verarbeiter und einem Qualitätsmanagementsystem des Herstellers übertragen werden. Auch ein kollaboratives CRM-System, das z.B. die Qualitätsmanagementsysteme von Lieferanten und Abnehmer datentechnisch verbindet kann eine systematische und direkte Datenrückführung (Feedback) ermöglichen. Die Erfindung erlaubt die Nutzbarmachung "indirekter", d.h. prozessferner Informationen für die Qualitätssteuerung einer Produktion. Dies ist insbesondere im Umfeld kostensensitiver Massengüter oder aufwendiger Messungen von unmittelbarem ökonomischem Wert, trägt zu einer Verstetigung der Produktqualität bei und nutzt synergetisch (oft) ohnehin vorhandene Daten.

Eine erste vorteilhafte Ausgestaltung der der vorliegenden Erfindung besteht darin, dass für jedes Produkt und für jedes zur Herstellung verwendete Halbprodukt ein Datensatz existiert, in dem die aus späteren Lebenszyklusabschnitten verfügbaren Daten hinterlegt werden. Dies ermöglicht eine sytematische und eindeutige Zuordnung von Rückmeldedaten nachgelagerter Produktlebenszyklusabschnitte.

Eine weitere vorteilhafte Ausgestaltung der der vorliegenden Erfindung besteht darin, dass die Datensätze für ein Produkt gesammelt und zu einem Datensatz für das entsprechende Produkt aggregiert werden. Die Datensammlung für ein Produkt ermöglicht die frühzeitige Erkennung eines Problems. Wenn z.B. bei Verarbeiter A (z.B. ein in der Wertschöpfungskette nachfolgender Abnehmer des Produktes) ein Problem auftaucht, können Verarbeiter B und C frühzeitig informiert werden. Wenn aber derselbe Fehler von mehreren Verarbeitern gemeldet wird, ist dies ein Indiz, dass sofort die Produktion nachgesteuert werden muss.

Eine weitere vorteilhafte Ausgestaltung der der vorliegenden Erfindung besteht darin, dass die Datensätze für ein Produkt zu einem Datensatz für einen entsprechenden Produkttyp und/oder Produktmodell und/oder eine Sorte aggregiert werden. Die Datensammlung für einen Produkttyp oder eine Sorte erlaubt eine langfristige Optimierung des Typs oder ggf. sogar die Erreichung eines Status "Betriebsbewährung" für die Sorte. Die Produktionsparameter für einen langfristig bewährten Typ oder Sorte können dann mit "ruhigem Gewissen" für einen Folgetyp oder Folgesorte wiederverwendet werden bzw. als Basis dienen.

Eine weitere vorteilhafte Ausgestaltung der der vorliegenden Erfindung besteht darin, dass die entsprechenden Datensätze für Halbprodukte, Produkte, Produkttypen und Produktmodellen jeweils auf Änderungen untersucht werden und die Unterschiede mit den jeweiligen Produktions- oder Montagebedingungen in Beziehung gesetzt werden. Durch die Korrelation der Datensätze (die Datensätze stellen auch einen Repräsentanten für die Qualität der entsprechenden Halbprodukte, Produkte, Produkttypen oder Produktmodellen dar) mit den jeweiligen Produktions- oder Montagebedingungen der Herstellung kann eine objektive Beziehung und auch ein Rückschluss zwischen den Produktions- bzw. Montagebedingungen und der Qualität der hergestellten Produkte erreicht und nachgewiesen werden.

Eine weitere vorteilhafte Ausgestaltung der der vorliegenden Erfindung besteht darin, dass die Daten aus den nachgelagerten Lebenszyklusabschnitten aus dem Qualitäts- und Assetmanagement nachgelagerter firmeninterner Prozesse und/oder aus Vertriebsinformationen stammen. Vertriebsinformationen beinhalten üblicherweise ein direktes Kunden- oder Marktfeedback über ein Produkt und stellen somit Informationen dar, die dediziert im jeweiligen Produktherstellungsprozess verwendet werden können. Weitere Vorteile ergeben sich, wenn Qualitäts-und Assetmanagement firmeninterner Prozesse datentechnisch verbunden oder in einem PLM-System (Product Lifecycle Management / Produktlebenszyklusmanagement) integriert sind. Ein PLM-System ist ein IT-System (Informationstechnologie), mit dem alle Daten, die bei der Entwicklung, Produktion, Lagerhaltung und dem Vertrieb eines Produkts anfallen, einheitlich gespeichert, verwaltet und abgerufen werden können. Vorteilhafterweise greifen alle Bereiche bzw. Systeme, die mit einem Produkt in Berührung kommen, auf eine gemeinsame Datenbasis zu. Planung (ERP/PPS), Konstruktion (CAD), Berechnung (CAE) und Fertigung (CAM), Controlling, Vertrieb, Service und Qualitätssicherung sind datentechnisch integriert. Rückmeldungen aus einem Bereich können somit sofort in vor- oder nachgelagerten Bereichen berücksichtigt werden.

Eine weitere vorteilhafte Ausgestaltung der der vorliegenden Erfindung besteht darin, dass die Daten aus den nachgelagerten Lebenszyklusabschnitten aus dem Qualitäts- und Assetmanagement nachgelagerter firmenexterner Prozesse und/oder aus Customer-Relationship-Werkzeugen und/oder aus Prüfberichten unabhängiger Sachverständiger stammen. Dies erlaubt eine systematische produktbezogene Datensammlung von Dritten, die das Produkt benutzen und ermöglicht somit ein schnelles zielgerichtetes Reagieren auf externe Rückmeldungen. Es können auch "Data Mining"-Werkzeuge und -Methoden (z.B. Internet Crawler oder Suchmaschinen) eingesetzt werden, um produktspezifische Informationen zu gewinnen, um diese dann für die Verbesserung des Herstellungsprozesses zu verwenden.

Eine weitere vorteilhafte Ausgestaltung der vorliegenden Erfindung besteht darin, dass das Verfahren zur Qualitätssicherung bei der Coil-Produktion (Bunde) verwendet wird, wobei das Qualitätsmanagementsystem des Coil-Herstellers vom Qualitätsmanagementsystem eines nachgelagerten Verarbeiters über eine online Schnittstelle automatisch definierte Qualitätsdaten von Produkten des Verarbeiters erhält. Eine bundabhängig veränderte Ausschussrate, eine Änderung bei Fräserstandzeiten / Pressenkräften oder eine veränderte Spanbildung beim Drehen (länger, kürzer, rissiger usw.) sind wertvolle Hinweise auf eine Änderung von Coil-Eigenschaften, die dazu genutzt werden können, die Coil-Produktion zu optimieren. Die technische Realisierung kann z.B. vorzugsweise die Form von Online-IT-Schnittstellen annehmen, mit denen entsprechend zwischen Coil-Hersteller und Verarbeiter definierte Daten automatisch zwischen den Bearbeitungssystemen der Verarbeiter und einem Qualitätsmanagementsystem des Stahlproduzenten übertragen werden.

Eine weitere vorteilhafte Ausgestaltung der der vorliegenden Erfindung besteht darin, dass es sich bei den Qualitätsdaten des nachgelagerten Verarbeiters (z.B. Autoproduzent) um Messdaten und/oder Sensordaten handelt, die direkt im Qualitätsmanagementsystem des Coil-Herstellers (z.B. Stahlwerk) berücksichtigt werden. Bei Messdaten und Sensordaten eines nachgelagerten Verarbeiters handelt es sich um Daten, die noch vor einem Rollout (z.B. Auslieferung an Kunden) des Produktes anfallen. Wenn Produktprobleme noch vor Auslieferung des Produktes systematisch erkannt und an den Hersteller rückgemeldet werden, dann sind die Kosten für die Behebung des Problems geringer als nach einem Rollout.

Eine weitere vorteilhafte Ausgestaltung der der vorliegenden Erfindung besteht darin, dass das Produkt mit einem RDID-Tag versehen ist und die Recyclingeigenschaften am Lebenszyklusende des Produktes mit den Daten der zur Herstellung des Produktes verwendeten Halbprodukte verglichen werden. Mit RFID-Tags gekennzeichnete Gegenstände erlauben eine Zuordnung bis zum Wiedereinschmelzen des Gegenstandes und ermöglichen prinzipiell die Recyclingeigenschaften am Lebenszyklusende eines Produkts (z.B. PKW, Getränkedose, o.ä.) mit den Daten des zu dessen Herstellung verwendeten Coils zu vergleichen. Eine weitere vorteilhafte Ausgestaltung der der vorliegenden Erfindung besteht darin, dass die Daten nachgelagerter externer Verarbeiter und/oder Nutzer des Produktes direkt online dem Betreiber des vorgelagerten Produktherstellungsprozesses bereitgestellt werden. Vorteilhafterweise werden die externen Verarbeiterdaten direkt im Produktherstellungsprozess (d.h. auf "shop floor"-Ebene) bereitgestellt. Dazu ist es nötig, dass definierte (abgestimmte, genormte oder standardisierte) Datenschnittstellen zwischen dem Betreiber des Herstellungsprozesses und den nachgelagerten Verarbeitern/Nutzern vorhanden sind. Bei der Stahlherstellung könnte eine Schnittstelle z.B. folgende Form haben: (Name, Unit, Detailed description), mit folgenden beispielhaften Dateninhalten: 'RollForceFm1', 'N', 'technological roll force in stand 1 of Finishing Mill'. Vorteilhafterweise wird die Datenverbindung zwischen dem Betreiber des Herstellungsprozesses und den nachgelagerten Verarbeitern/Nutzern über Verschlüsselungsmechanismen (z.B. PGP) gesichert.

Eine weitere vorteilhafte Ausgestaltung der der vorliegenden Erfindung besteht darin, dass die Daten eines nachgelagerten externen Verarbeiters und/oder Nutzers über einen neutralen Dritten dem Betreiber des vorgelagerten Produktherstellungsprozesses bereitgestellt werden. Durch die Lagerung und Weiterleitung der Daten durch einen 'neutralen' Dritten wird z.B. eine Anonymisierung der Daten sichergestellt.

Die Aufgabe wird weiterhin gelöst durch eine Vorrichtung zur Durchführung eines der obigen Verfahren. Vorteilhafterweise basiert die Anordnung auf einer datentechnischen Integration des Herstellungsprozesses mit nachgelagerten firmeninternen und/oder firmenexternen Prozessen des Produktlebenszyklus. Die Vorrichtung kann z.B. als PLM-System (Product Lifecycle Management / Produktlebenszyklusmanagement) realisiert sein. Ein PLM-System ist ein IT-System (Informationstechnologie), mit dem alle Daten, die bei der Entwicklung, Produktion, Lagerhaltung und dem Vertrieb eines Produkts anfallen, einheitlich gespeichert, verwaltet und abgerufen werden können. Vorteilhafterweise greifen alle Bereiche bzw. Systeme, die mit einem Produkt in Zusammenhang stehen, auf eine gemeinsame Datenbasis zu. Planung (ERP/PPS), Konstruktion (CAD), Berechnung (CAE), Fertigung (CAM), Controlling, Vertrieb, Service und Qualitätssicherung sind datentechnisch integriert. Auch Fremdsysteme (z.B. von Kunden oder Lieferanten) können integriert sein. Die Integration kann über LAN- bzw. WLAN-Technologie, aber auch über Internet oder Intranet erfolgen.

Ein Ausführungsbeispiel der Erfindung ist in der Zeichnung dargestellt und wird im Folgenden erläutert.

Dabei zeigen:
- FIG 1: ein beispielhaftes und schematisches Übersichtsbild zu Eigenschaftsräumen von Stahlprodukten,
- FIG 2: ein schematisches Übersichtsbild zur Qualitätssteuerung bei der Erzeugung von Stahlprodukten,
- FIG 3: ein schematisches Übersichtsbild zur Qualitätssteuerung unter Nutzung nachgelagerter Lebenszyklusabschnitte,
- FIG 4: ein schematisches Übersichtsbild zur Aggregation von der Produktion nachgelagerten Daten, und
- FIG 5: ein beispielhaftes schematisches Übersichtsbild zur Dokumentation der Produktionsergebnisse.

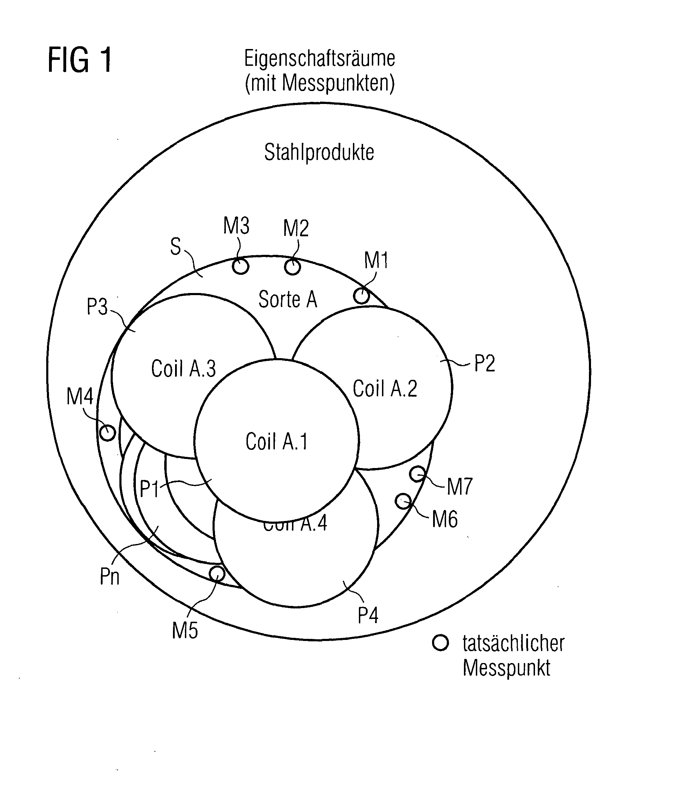

FIG 1 zeigt ein beispielhaftes und schematisches Übersichtsbild zu Eigenschaftsräumen von Stahlprodukten. Die Charakterisierung von Produkteigenschaften bei industriellen Prozessen stößt in der Praxis an Grenzen bezüglich Wirtschaftlichkeit und Praktikabilität. Dies bedeutet in der Praxis z.B. daß bei Prozessen (in Abhängigkeit vom Anwendungszweck und nach Abschätzung der Zulässigkeit) nicht alle technisch möglichen Messungen durchgeführt werden, nur stichprobenartig gemessen wird (an Messpunkten M1 bis M7) oder auch Prozesse primär aufgrund von mehr oder weniger umfassenden vorwiegend anlagenlokalen Erfahrungswerten gefahren werden.

Ein konkretes Anwendungsbeispiel ist die Produktion von Flachstahlprodukten, z.B. Coils P1 bis Pn, bei der eine exakte Ermittlung der Walztexturen (anisotrope Verteilung der Kristallite in Abhängigkeit vom Walzprozess) zwar technisch möglich ist, aber wegen des damit verbundenen Aufwands (Probennahme, metallographische Aufbereitung, röntgenologische Untersuchung, Datenauswertung und -interpretation) nur in Problem- oder Sonderfällen (z.B. Elektrobleche) erfolgt. Daraus ergibt sich besonders auch für "unkritische" und / oder margenschwache Produkte das Problem, dass die Qualität der Produkte P1 bis Pn zwar mit einer gewissen Wahrscheinlichkeit im Vertrauensintervall liegt, ein Verlassen des zulässigen Bereichs aber nicht systematisch erkannt wird. Dieses Problem betrifft insbesondere auch Übergangszustände (Produktionsanlauf, Streckbetrieb u.ä.) oder Produkt(-ions)umstellungen. Die Auswertung der Messpunkte M1 bis M7 gibt auch einen Rückschluss auf die Qualität der zu den Produkten P1 bis Pn zugehörigen Sorte S.

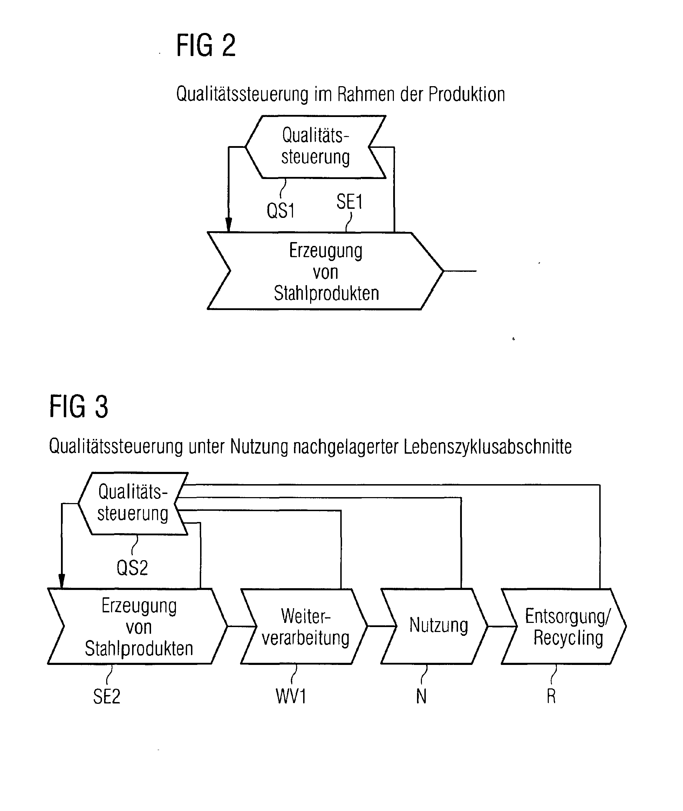

FIG 2 zeigt ein schematisches Übersichtsbild zur Qualitätssteuerung bei der Erzeugung von Stahlprodukten, das einen ersten Lösungsansatz zur möglichen Beherrschung des in Figur 1 angesprochenen Messproblems aufzeigt. Die Beherrschung des Problems erfolgt durch vorherige Abschätzung des nötigen Messaufwands (Messgrößen, -geräte, -intensität, ..) und ggf. Anpassung bei Reklamationen. Die Aktivitäten erfolgen dabei allerdings nur im unmittelbaren (technischen) Umfeld der Produktion. In FIG 2 wird der Prozess SE1 zur Erzeugung von Stahlprodukten (z.B. Coils) durch eine Qualitätssteuerung QS1 geregelt und überwacht. Die Qualitätssteuerung QS1 wertet Sensor- und Messdaten aus dem Stahlerzeugungsprozess SE1 aus und wirkt auf den Prozess SE1 ein durch Änderung oder Anpassung von Prozessparametern bzw. Prozessstellgrößen. Die Darstellung nach FIG 2 stellt aber einen Regelkreis, der nur innerhalb des eigentlichen Produktionsprozesses wirkt.

FIG 3 zeigt ein schematisches Übersichtsbild zur Qualitätssteuerung eines Herstellungsprozesses (z.B. Produktions- oder Montageprozess) unter Nutzung nachgelagerter Lebenszyklusabschnitte des Herstellungsprozesses. Die Erfindung basiert auf der strukturierten Nutzung "ndirekter" Informationen zur Verbesserung der Erfahrungsbasis des Herstellungsprozesses eines Produktes. Hierzu werden alle relevant erscheinenden verfügbaren Informationen aus nachgelagerten Lebenszyklusabschnitten (z.B. Verarbeitung WV1, Nutzung N, Entsorgung/Recycling R) gesammelt und zur laufenden Qualitätssteuerung QS2 des Herstellungsprozesses SE2 eingesetzt.

### Datenerfassung und -aufbereitung

Bei den weiteren Abschnitten im Lebenszyklus fällt in verschiedenen Systemen eine Vielzahl Daten an. Bei Fräsautomaten werden z.B. die Standzeiten der Werkzeuge erfasst und auf dieser Basis deren Austausch gesteuert. Bei Pressen werden Umformkräfte gemessen. Bei spanender Bearbeitung ist die Gestalt des Spans eine wesentliche Größe zur Einstellung der Maschinen. Beim Schweißen ist das Aussehen und die Durchgängigkeit der aufgeschmolzenen Bereiche eine wichtige Größe. In einer Beizanlage ist das Reaktionsverhalten der Oberfläche eine direkt materialabhängige Größe. Weitere Daten fallen bei der Nutzung von Produkten an, wie z.B. TÜV-Berichte zu den einzelnen Automodellen.

Damit besteht die Möglichkeit, ohne aufwändige, explizit auf einen Effekt zugeschnittene Messungen implizites Wissen aus späteren Prozessschritten, bzw. Lebenszyklusabschnitten zur Bewertung des Produkts zu nutzen, vorzugsweise bei Produkten mit kurzen Lebenszyklen, die noch eine Nachsteuerung der Produktion SE2 erlauben.

Daten aus nachgelagerten Lebenszyklusabschnitten können sich z.B. speisen aus:
- Qualitäts- und Assetmanagement nachgelagerter firmen-interner Prozesse (z.B. Verzinkungsanlage, Stanzerei, Lackiererei),
- Qualitäts- und Assetmanagement nachgelagerter externer Prozesse (z.B. kooperierender Kunde, Recyclingfirma),
- Customer Relationship-Werkzeugen (z.B. Reklamationen, Supportanfragen, Feedbackbögen),
- Vertriebsinformationen (z.B. Änderungen / Auffälligkeiten im Bestellverhalten).

Interessierende Daten können z.B. sein:
- Messergebnisse im Rahmen von Wareneingangsprüfungen,
- Auffälligkeiten beim Tiefziehverhalten (z.B. Fehler als Hinweis zu Walztextur),
- Erhöhter Werkzeugverschleiss (z.B. Fräskopfstandzeit / - schäden als Hinweis zu Änderungen in der Härte),
- Lackierfehler (z.B. Hinweis zu Benetzungseigenschaften / Verschmutzung),
- Korrosion (z.B. Hinweis zu chemischer Zusammensetzung, Mikrorissbildung durch Cu-Anteil u.ä.),
- Oberflächenfehler,
- Ausschußquoten,
- Verarbeitbarkeit (z.B. Art der Spanbildung bei spanender Bearbeitung).

Interessant sind insbesondere auch Informationen, die sich aus den zunehmenden Verfolgungsmöglichkeiten durch RFID-Tags ergeben. Nachdem die entsprechend gekennzeichneten Gegenstände eine Zuordnung bis zum Wiedereinschmelzen erlauben ist es damit prinzipiell möglich, die Recyclingeigenschaften am Lebenszyklusende eines Produkts (z.B. PKW, Getränkedose, o.ä.) mit den Daten des zu dessen Herstellung verwendeten Coils zu vergleichen.

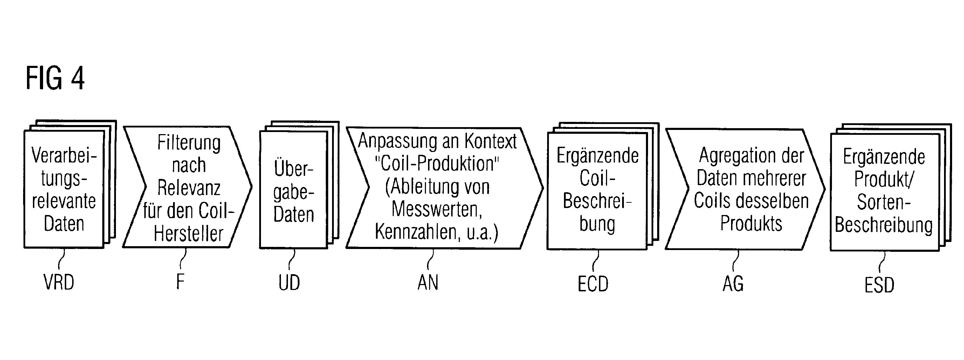

FIG 4 zeigt ein schematisches Übersichtsbild zur Aggregation von der Produktion nachgelagerten Daten. Ein wesentliches Merkmal der Erfindung ist, dass es vorrangig um die Nutzung von nachgelagerten Daten geht, die sich im Rahmen einer normalen Bearbeitung usw. ergeben. Eine bundabhängig veränderte Ausschussrate, eine Änderung bei Fräserstandzeiten / Pressenkräften oder eine veränderte Spanbildung beim Drehen (länger, kürzer, rissiger usw.) sind aber wertvolle Hinweise auf eine Änderung von Coil-Eigenschaften, die dazu genutzt werden können, die Coil-Produktion zu optimieren.

Die technische Realisierung kann z.B. vorzugsweise die Form von Online-IT-Schnittstellen annehmen, mit denen entsprechend zwischen Coil-Hersteller und Verarbeiter definierte Daten automatisch zwischen den Bearbeitungssystemen der Verarbeiter und einem Qualitätsmanagementsystem des Stahlproduzenten übertragen werden. Eine andere Variante ist die Nutzung von aggregierten Informationen, wie z.B. die o.g. TÜV-Berichte oder Auswertungen, die von Recyclingunternehmen durchgeführt werden und händisch eingepflegt werden müssen.

Die so gewonnenen Daten können nun z.B. mittels Vergleich zwischen verschiedenen Bunden in derselben Anwendung auf Änderungen untersucht und mit Unterschieden in den Produktionsbedingungen in Beziehung gesetzt werden.

Im beispielhaften Ablaufdiagramm nach FIG 4 werden der Herstellung nachgelagerte verarbeitungsrelevante Daten VRD systematisch erfasst, nach Relevanz für einen bestimmten Hersteller (z.B. Coil-Hersteller) gefiltert (F) und in einem definierten Datenformat (z.B. XML) dem Hersteller als Übergabedaten UD bereitgestellt. Die Übergabedaten UD werden an den Kontext des Herstellers angepasst (AN) und daraus wird eine ergänzende Produkt-Beschreibung ECD (z.B. Coil-Beschreibung) erstellt. Die Anpassung an den Kontext Coil-Produktion kann z.B. in der Ableitung von Messwerten und Kennzahlen bestehen. Der nächste Schritt ist die Aggregation AG der Produktdaten um eine ergänzende Produkt- bzw. Sortenbeschreibung ESD zu erstellen. Bei der Coil-Herstellung werden Daten mehrerer Coils desselben Produktes aggregiert.

Eine weitere vorteilhafte Ausgestaltung der Erfindung besteht in der Erweiterung um z.B. die Möglichkeit zur Korrelationsbildung mit den Produktionsdaten, z.B. im Rahmen eines Qualitätsmanagement- oder "Data Mining"-Werkzeugs, sowie die Einbindung in bestehende Warn- und Meldesysteme und die Verfügbarmachung im unmittelbaren Produktionsumfeld (z.B. durch eine "Verarbeiterdatensicht"). Insbesondere erlaubt diese Art von Sammlung auch die Nutzung von Erkenntnissen aus einer (u.U. anspruchsvolleren) Anwendung für andere Anwendungen ("..das hat bei x sicher funktioniert, also wird es auch bei y funktionieren").

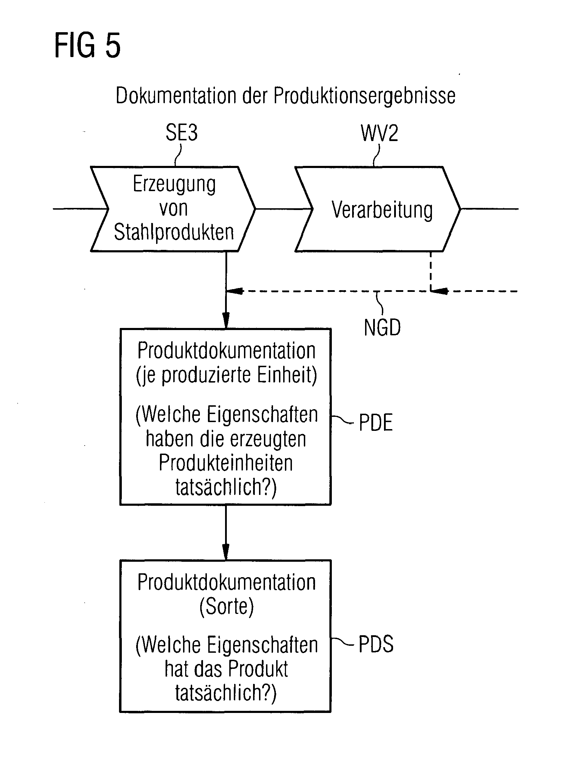

FIG 5 zeigt ein beispielhaftes schematisches Übersichtsbild zur Dokumentation der Produktionsergebnisse. Die Dokumentation basiert auf Daten vom Herstellungsprozess SE3 und auf nachgelagerte interne und/oder externe Daten NGD (durch gestrichelten Pfeil dargestellt). Nachgelagerte externe Daten können z.B. Verbraucherinformationen (z.B. aus Fachzeitschriften oder Testberichte) oder TÜV-Berichte sein. Die Produktdokumentation teilt sich auf in eine Produktdokumentation PDE je produzierter Einheit und in eine Produktdokumentation PDS für die zugehörige Sorte bzw. den zugehörigen Produkttyp.

Produktdokumentation PDE (je produzierte Einheit):
- Zu jeder Produkteinheit (z.B. Coil) wird ein Datensatz vorgehalten, in dem verfügbare Daten aus späteren Lebenszyklusabschnitten festgehalten werden (Ablage der Daten aus der Datenerfassung und Aufbereitung).

Produktdokumentation PDS (je Produkt/Produkttyp/Sorte):
Zu jedem Produkt (z.B. Sorte A) wird ein Datensatz für externe Daten vorgehalten, in dem die Inhalte aus der Produktdokumentation PDE je produzierter Einheit aggregiert werden. Die Aggregation kann z.B. in folgender Weise erfolgen:
   - Sammlung der Anwendungsfälle/Verarbeitungsweisen, für die das Material eingesetzt wird,
   - Ausfüllung von Eigenschaftsräumen/Entwicklung von Toleranzbändern, z.B.: das Material wurde mit Fräsern mit Schnittgeschwindigkeiten von u bis v m/s und Vorschüben von x bis y mm/s bearbeitet.

Diese Vorgehensweise führt zu einer produktspezifischen Sammlung von Informationen, die die tatsächlichen Messwerte ergänzen, bestätigen und helfen, die Annahmen bzgl. der Auslegung der Messungen zu validieren. Ferner ist es durch diese anwendungsbezogene Informationssammlung möglich, Produkte und Angebote zu optimieren, z.B. durch:
- Reduzierung von Eigenschaften, die von Anwendern nicht genutzt werden,
- Erfahrungsbasierte Einsetzbarkeit von Minder-Qualitäten für spezielle Anwendungen (Einzelfall-Qualifizierung)
- Optimierung von Produkten für Haupt-Einsatzbereiche.

Verfahren und Vorrichtung zur Qualitätssicherung eines industriellen Produktionsprozesses oder eines Montageprozesses zur Herstellung von Produkten, wobei Produktdaten der Herstellung nachgelagerter Produktlebenszyklusabschnitte systematisch erfasst und analysiert werden und für die Qualitätssicherung des industriellen Produktions- oder Montageprozesses direkt verwendet werden. Die Vorrichtung und das Verfahren können insbesondere in ein PLM-System (Product Lifecycle Management / Produktlebenszyklusmanagement) integriert sein, oder als PLM-System realisiert sein.

### Bezugszeichen

- M1 - M7: Messpunkt
- S: Sorte
- P1 - Pn: Produkt
- QS1, QS2: Qualitätssteuerung
- SE1 - SE3: Stahlerzeugung
- WV1, WV2: Weiterverarbeitung
- N: Nutzung
- R: Recycling
- F: Filterung
- AN: Anpassung
- AG: Aggregation
- VRD: Verarbeitungsrelevante Daten
- UD: Übergabedaten
- ECD: Ergänzende Coil-Beschreibung
- ESD: Ergänzende Sorten-Beschreibung
- NGD: Nachgelagerte Daten
- PDE: Produktdokumentation Einheit
- PDS: Produktdokumentation Sorte

## Patentansprüche

1. Verfahren zur Qualitätssicherung (QS1,QS2) eines industriellen Produktionsprozesses (SE1 - SE3) oder eines Montageprozesses zur Herstellung von Produkten (P1 - Pn), wobei Produktdaten der Herstellung nachgelagerter Produktlebenszyklusabschnitte (WV1,WV2,N,R) systematisch erfasst und analysiert werden und für die Qualitätssicherung (QS1,QS2) des industriellen Produktions- oder Montageprozesses (SE1 - SE3) direkt verwendet werden.

2. Verfahren nach Anspruch 1,
**dadurch gekennzeichnet, dass**
für jedes Produkt (P1 - Pn) und für jedes zur Herstellung verwendete Halbprodukt ein Datensatz existiert, in dem die aus späteren Lebenszyklusabschnitten (WV1,WV2,N,R) verfügbaren Daten hinterlegt werden.

3. Verfahren nach Anspruch 1 oder 2,
**dadurch gekennzeichnet,dass** die Datensätze für ein Produkt (P1 - Pn) gesammelt zu einem Datensatz für das entsprechende Produkt aggregiert werden.

4. Verfahren nach Anspruch 1 oder 2,
**dadurch gekennzeichnet, dass** die Datensätze für ein Produkt (P1 - Pn) zu einem Datensatz für einen entsprechenden Produkttyp und/oder Produktmodell und/oder eine Sorte (S) aggregiert werden.

5. Verfahren nach einem der vorstehenden Ansprüche, **dadurch gekennzeichnet, dass** die entsprechenden Datensätze für Halbprodukte, Produkte (P1 - Pn), Produkttypen und Produktmodellen jeweils auf Änderungen untersucht werden und die Unterschiede mit den jeweiligen Produktions- oder Montagebedingungen in Beziehung gesetzt werden.

6. Verfahren nach einem der vorstehenden Ansprüche, **dadurch gekennzeichnet, dass** die Daten aus den nachgelagerten Lebenszyklusabschnitten (WV1, WV2, N, R) aus dem Qualitäts- und Assetmanagement nachgelagerter firmen-interner Prozesse und/oder aus Vertriebsinformationen stammen.

7. Verfahren nach einem der vorstehenden Ansprüche, **dadurch gekennzeichnet,dass** die Daten aus den nachgelagerten Lebenszyklusabschnitten (WV1,WV2,N,R) aus dem Qualitäts- und Assetmanagement nachgelagerter firmen-externer Prozesse und/oder aus Customer-Relationship-Werkzeugen und/oder aus Prüfberichten unabhängiger Sachverständiger stammen.

8. Verfahren nach einem der vorstehenden Ansprüche, **dadurch gekennzeichnet, dass** das Verfahren zur Qualitätssicherung bei der Coil-Produktion (Bunde) verwendet wird, wobei das Qualitätsmanagementsystem (QS1, QS2) des Coil-Herstellers vom Qualitätsmanagementsystem eines nachgelagerten Verarbeiters (WV1,WV2,N,R) über eine online Schnittstelle automatisch definierte Qualitätsdaten von Produkten des Verarbeiters (WV1,WV2,N,R) erhält.

9. Verfahren nach Anspruch 8,
**dadurch gekennzeichnet, dass** es sich bei den Qualitätsdaten des nachgelagerten Verarbeiters um Messdaten und/oder Sensordaten handelt, die direkt im Qualitätsmanagementsystem (QS1,QS2) des Coil-Herstellers berücksichtigt werden.

10. Verfahren nach einem der vorstehenden Ansprüche, wobei das Produkt (P1 - Pn) mit einem RDID-Tag versehen ist und die Recyclingeigenschaften am Lebenszyklusende (R) des Produktes (P1 - Pn) mit den Daten der zur Herstellung des Produktes (P1 - Pn) verwendeten Halbprodukte verglichen werden.

11. Verfahren nach einem der vorstehenden Ansprüche, wobei die Daten nachgelagerter externer Verarbeiter und/oder Nutzer des Produktes direkt online dem Betreiber des vorgelagerten Produktherstellungsprozesses bereitgestellt werden.

12. Verfahren nach Anspruch 11, wobei
die Daten eines nachgelagerten externen Verarbeiters und/oder Nutzers über einen neutralen Dritten dem Betreiber des vorgelagerten Produktherstellungsprozesses bereitgestellt werden.

13. Vorrichtung zur Durchführung eines Verfahrens nach einem der Ansprüche 1 bis 12.

14. Vorrichtung nach Anspruch 13,
**dadurch gekennzeichnet, dass**
es sich bei der Vorrichtung um ein PLM-System handelt.
